# EUROPEAN PATENT APPLICATION

(11) **EP 3 687 157 A1**
(43) Date of publication of application: **29.07.2020**
(21) Application number: 17928782.6
(22) Date of filing: 14.10.2017
(51) Int. Cl.: H04N 5/232

(54) **METHOD FOR CAPTURING IMAGES AND ELECTRONIC DEVICE**

(71) Applicant: Huawei Technologies Co., Ltd., Longgang District Shenzhen, Guangdong 518129 (CN)
(72) Inventor: LI, Yu, Shenzhen Guangdong 518129 (CN); HUANG, Xiujie, Shenzhen Guangdong 518129 (CN); CHEN, Yuanlin, Shenzhen Guangdong 518129 (CN)
(74) Representative: Gill Jennings & Every LLP
(86) International application number: PCT/CN2017/106217
(87) International publication number: WO 2019/071623

(57) **Abstract**

A photographing method and an electronic apparatus are disclosed. The photographing method includes: detecting whether a camera is currently in a stable photographing state; when the camera is currently in the stable photographing state, obtaining image data at a first time point; determining a target photographing type based on the image data at the first time point; when a photographing instruction from a user is received, obtaining image data at a second time point; and processing the image data at the second time point according to an image processing manner corresponding to the target photographing type, to obtain target image data. According to the method, ineffective execution of a scene identification algorithm can be avoided, calculation load is reduced, and an operating speed is increased.

## Description

### TECHNICAL FIELD

The present invention relates to the field of computers, and specifically, to a photographing method and an electronic apparatus.

### BACKGROUND

Recently, cameras having a "photographing mode" function have been widely used. Different photographed objects (or photographed scenes) or different current statuses of photographed objects correspond to different photographing modes, for example, a portrait mode, a landscape mode, or a night mode. Usually, a user may actively select a photographing mode. However, it is difficult for a beginner who lacks camera operation experience to determine a photographing mode matching a photographed object or a current status of a photographed object.

To resolve this problem, a scene identification function is provided, and the photographed object or the current status of the photographed object is analyzed by using the scene identification function. A currently relatively suitable photographing mode is automatically determined by using the scene identification function. After selecting the determined photographing mode, the user performs photographing according to a camera photographing condition corresponding to the determined photographing mode.

The scene identification function is very useful for the beginner. However, when the scene identification function is used, scene identification is often continuously performed, and even if the determined photographing mode is selected, the scene identification is often continuously performed and an algorithm used for the scene identification is repeatedly executed. Consequently, calculation load is increased, and an operating speed of the camera or an electronic apparatus in which the camera is located is reduced.

### SUMMARY

An objective of embodiments of the present invention is to provide a photographing method and an electronic apparatus, to avoid ineffective execution of a scene identification algorithm, reduce calculation load, and increase an operating speed.

The objective and other objectives are achieved by using features in independent claims. Further implementations are reflected in dependent claims, this specification, and the accompanying drawings.

According to a first aspect, a photographing method is provided. The method is performed by an electronic apparatus, the electronic apparatus includes a camera, and the camera may be configured to convert light incident to a lens of the camera to obtain image data. The camera may be referred to as a camera lens, and the method includes:
detecting whether the camera is currently in a stable photographing state;
when the camera is currently in the stable photographing state, obtaining image data at a first time point;
determining a target photographing type based on the image data at the first time point, where the target photographing type may be used to indicate a type of a photographed scene indicated by the image data at the first time point;
when a photographing instruction from a user is received, obtaining image data at a second time point; and
processing the image data at the second time point according to an image processing manner corresponding to the target photographing type, to obtain target image data.

Scene identification is enabled only when the camera is in the stable photographing state, so that ineffective identification caused when a user does not start to take a picture but scene identification is enabled can be avoided, load of the electronic apparatus can be reduced, and an operating speed of the electronic apparatus can be improved.

The photographing method may also be referred to as a method for photographing an image.

The stable photographing state may mean that when the camera is in the stable photographing state, a photographed image is not blurry with movement of the electronic apparatus. Alternatively, the stable photographing state may mean that the electronic apparatus is in a still state or a uniform motion state.

Obtaining may be understood as an action such as capturing, seizing, or photographing, by the camera, light incident to a lens module for converting the light into image data. The camera may be a lens module or a lens mounted on a mobile phone.

The image data at the first time point may be the image data captured (or seized, or photographed, or shot) by the camera at the first time point. The image data at the second time point may be the image data captured by the camera at the second time point.

The image data at the first time point and the image data at the second time point may be obtained by the camera of the electronic apparatus, or obtained by using the camera of the electronic apparatus. That the camera is in the stable photographing state may also be understood as that the electronic apparatus is in the stable photographing state.

A scene type of the photographed scene may be at least one of a stage scene, a night scene, a blue-sky scene (which may also be referred to as a sky scene), a plant scene (which may also be referred to as a green plant scene), a food scene (which may also be referred to as a gourmet scene, a cuisine scene, or a food material scene), a snow scene, a sunrise and sunset scene, a flower scene, a text scene, and a beach scene.

Alternatively, the photographed scene may be a photographed object, and the first time point may be a time point when or after it is determined that the camera is in a stable state. The second time point may be a time point when or after the photographing instruction from the user is received. The second time point is later than the first time point.

The target photographing type is determined based on the image data at the first time point, and therefore, the target photographing type may be referred to as a target photographing type corresponding to the image data at the first time point. An image indicated by the image data at the first time point may correspond to one target photographing type, or may correspond to at least two target photographing types. Specifically, when the image corresponds to at least two target photographing types, at least two image areas in the image indicated by the image data at the first time point are in a one-to-one correspondence to the at least two target photographing types. Therefore, the determining, based on the image data at the first time point, a target photographing type corresponding to the image data at the first time point includes: determining, based on the image data at the first time point, area information of the at least two image areas in the image indicated by the image data at the first time point and target photographing types respectively corresponding to the at least two areas. The area information may be used to indicate a range of an image area. Correspondingly, the processing the image data at the second time point according to an image processing manner corresponding to the target photographing type, to obtain target image data may include: dividing, based on the area information of the at least two image areas, an image indicated by the image data at the second time point, to obtain at least two second image areas in the image indicated by the image data at the second time point; and respectively processing the at least two second image areas according to processing manners respectively corresponding to target photographing types that correspond to the at least two areas, to obtain the target image data. One image corresponds to at least two target photographing types, so that different processing policies are used for different areas in the image, and an image photographing effect may be better.

After the determining a target photographing type, the method may further include: displaying information used to indicate the target photographing type, and after a selection instruction of the target photographing type is received, processing the image data at the second time point according to an image processing manner corresponding to the target photographing type, to obtain the target image data. The selection instruction of the target photographing type may be triggered by the user.

Before the detecting whether the camera is currently in a stable photographing state, the method may further include: displaying the image indicated by the image data that is obtained by the camera. Displaying herein may be real-time displaying. It should be noted that a resolution of the image indicated by the image data for displaying is less than a resolution of the image data (for example, the image data at the second time point) for picture storage.

After the determining a target photographing type, the method may further include: displaying an icon used to indicate the target photographing type. Displaying herein may be real-time displaying. Specifically, the icon may be displayed at a lower right corner of a display of the electronic apparatus.

After the determining a target photographing type, the method may further include: processing, according to the image processing manner corresponding to the target photographing type, the image data obtained by the camera to obtain image data for previewing, and displaying an image indicated by the image data for previewing. The image data for previewing is displayed, so that the user can perceive a picture shooting effect in advance, avoiding that the picture shooting effect is learned only after the user shoots a picture, and thereby improving user experience. Displaying herein may be real-time displaying. It should be noted that a resolution of an image indicated by the image data for processing is less than a resolution of the image data (for example, the image data at the second time point) for picture storage. The image data for processing may be the image data for displaying. The image processing manner corresponding to the target photographing type may be an image processing manner that corresponds to the target photographing type and that is performed by an image signal processor ISP.

According to the first aspect, in a first possible implementation of the first aspect, the determining a target photographing type based on the image data at the first time point includes: determining, based on the image data at the first time point, at least two candidate photographing types of the photographed scene and confidence degrees of the at least two photographing types; and determining the target photographing type in the at least two photographing types based on the confidence degrees of the at least two photographing types.

The determining the target photographing type in the at least two photographing types based on the confidence degrees of the at least two photographing types may be determining, from the at least two photographing types, a photographing type having a highest confidence degree as the target photographing type. Alternatively, a photographing type whose confidence degree is greater than a confidence threshold (which may be preset) may be used as the target photographing type. Alternatively, a photographing type whose confidence degree is the highest and greater than the confidence threshold may be used as the target photographing type. There may be one or at least two target photographing types.

The candidate photographing type may be used to indicate a candidate type of the photographed scene indicated by the image data at the first time point.

According to the first possible implementation of the first aspect, in a second possible implementation of the first aspect, the determining, based on the image data at the first time point, at least two candidate photographing types of the photographed scene and confidence degrees of the at least two photographing types may include: obtaining, by using the image data at the first time point as an input of a photographing mode classification model, an output of the photographing mode classification model, where the output of the photographing mode classification model includes the at least two candidate photographing types and the confidence degrees of the at least two photographing types, the photographing mode classification model is obtained by training a to-be-trained photographing mode classification model by using a photographing mode training set, and the photographing mode training set includes first training image data and a photographing type corresponding to the first training image data. Scene identification is performed by using the mode classification model obtained through training, so that an identification effect is more accurate than an effect that achieved by using an existing method in which a scene is identified by identifying shapes and objects in an image.

One piece of first training image data may correspond to one photographing type, or correspond to at least two photographing types. Specifically, when the first training image data corresponds to at least two photographing types, an image indicated by the first training image data may include at least two image areas, and the at least two image areas are in a one-to-one correspondence to the at least two photographing types.

According to the second possible implementation of the first aspect, in a third possible implementation of the first aspect, the photographing mode training set further includes second training image data marked as being not corresponding to the photographing type. Therefore, a photographing category of the photographed scene can be more accurately identified by using the model obtained through training.

According to any one of the first aspect or the possible implementations of the first aspect, in a fourth possible implementation of the first aspect, the type of the photographed scene is a food scene, and the processing the image data at the second time point according to an image processing manner corresponding to the target photographing type, to obtain target image data includes: increasing contrast and color saturation of an image indicated by the image data at the second time point, to obtain the target image data. In such a processing manner, a photographed food image is more attractive.

According to any one of the first aspect or the possible implementations of the first aspect, in a fifth possible implementation of the first aspect, the type of the photographed scene is a night scene, and the processing the image data at the second time point according to an image processing manner corresponding to the target photographing type, to obtain target image data includes: adjusting a dynamic range and a pixel brightness value of an image indicated by the image data at the second time point, to increase the dynamic range of the image indicated by the image data at the second time point and repair an over-exposed area or an under-exposed area in the image indicated by the image data at the second time point, to obtain the target image data. In such a processing manner, an object in the over-exposed area or the under-exposed area is clearer instead of blurry.

In a process of obtaining the target image data based on the image data at the second time point, denoising processing may further be performed. Specifically, noise in an area that has relatively low brightness in an image may be reduced.

The over-exposed area may be an area whose brightness is greater than a threshold. The under-exposed area may be an area whose brightness is less than a threshold. The thresholds used for measuring the over-exposed area and the under-exposed area may be a same threshold, or may be different thresholds.

According to any one of the first aspect or the possible implementations of the first aspect, in a sixth possible implementation of the first aspect, the type of the photographed scene is a blue-sky scene, and the processing the image data at the second time point according to an image processing manner corresponding to the target photographing type, to obtain target image data includes: calculating an adjustment coefficient based on a preset target blue-sky color value and a sky color value in an image indicated by the image data at the second time point; and processing, based on the adjustment coefficient, the image indicated by the image data at the second time point, to obtain the target image data. In such a processing manner, an obtained sky image is more naturally blue.

Specifically, the method for calculating the adjustment coefficient may be: determining one sky color value in a plurality of sky color values in the image, and calculating an adjustment coefficient based on the sky color value and a target blue-sky color value, so that a color value that is obtained after the sky color value is processed based on the adjustment coefficient is the target blue-sky color value. In another implementation, a lookup table may be created based on the sky color value and the target blue-sky color value, where the lookup table includes a correspondence between a color value before mapping is performed and a color value after mapping is performed, so that a color value obtained after the sky color value is processed according to the lookup table is the target blue-sky color value, and then an image indicated by the image data at the second time point may be processed according to the lookup table, to obtain the target image data.

According to any one of the first aspect or the possible implementations of the first aspect, in a seventh possible implementation of the first aspect, a type of the photographed scene is a green plant scene, and the processing the image data at the second time point according to an image processing manner corresponding to the target photographing type, to obtain target image data includes: increasing a color temperature and color saturation of an image indicated by the image data at the second time point, to obtain the target image data. The increasing a color temperature of an image indicated by the image data at the second time point may be adjusting the color temperature to a color temperature closer to a warm color. In a specific method for adjusting the color temperature, white balance may be used. In such a processing manner, a plant in an obtained image is more vigorous.

According to any one of the first aspect or the possible implementations of the first aspect, in an eighth possible implementation of the first aspect, a type of the photographed scene is a stage scene, and the processing the image data at the second time point according to an image processing manner corresponding to the target photographing type, to obtain target image data includes: adjusting a dynamic range and a pixel brightness value of an image indicated by the image data at the second time point, to increase the dynamic range of the image indicated by the image data at the second time point and repair an over-exposed area or an under-exposed area in the image indicated by the image data at the second time point, to obtain the target image data.

In a process of obtaining the target image data based on the image data at the second time point, denoising processing may further be performed.

According to any one of the first aspect or the possible implementations of the first aspect, in a ninth possible implementation of the first aspect, the detecting whether the camera is currently in a stable photographing state includes:
obtaining an acceleration value of movement of the camera or the electronic apparatus in a time segment before a current time point; and
determining whether an absolute value of the acceleration value is less than or equal to an acceleration threshold, and when the absolute value of the acceleration value is less than or equal to the acceleration threshold, the camera is currently in the stable photographing state, where the acceleration threshold is a real number greater than zero.

Duration of the time segment before the current time point may be preset. The acceleration threshold may also be preset.

The acceleration value may be obtained by using a gyroscope sensor in the electronic apparatus.

The detecting whether the camera is currently in a stable photographing state may also include: obtaining image data at the current time point; comparing the image data at the current time point with image data obtained at a previous time point of the current time point; and when a matching degree between the image data at the current time point and the image data at the previous time point is greater than a matching threshold, the camera is currently in the stable photographing state. The matching threshold may be preset.

A second aspect of the present invention provides an electronic apparatus, the electronic apparatus includes a camera, and the electronic apparatus further includes:
a detection module, configured to detect whether the camera is currently in a stable photographing state;
an obtaining module, configured to: when the camera is currently in the stable photographing state, obtain image data at a first time point;
a determining module, configured to determine a target photographing type based on the image data that is obtained by the obtaining unit at the first time point, where
the obtaining module is further configured to: when a photographing instruction from a user is received, obtain image data at a second time point; and
a processing module, configured to process the image data at the second time point according to an image processing manner corresponding to the target photographing type that is determined by the determining unit, to obtain target image data.

With reference to the second aspect, in a first possible implementation of the second aspect, the determining module is configured to: determine, based on the image data at the first time point, at least two candidate photographing types of the photographed scene and confidence degrees of the at least two photographing types; and determine the target photographing type in the at least two photographing types based on the confidence degrees of the at least two photographing types.

With reference to the first possible implementation of the second aspect, in a second possible implementation of the second aspect, the determining module is configured to: obtain, by using the image data at the first time point as an input of a photographing mode classification model, an output of the photographing mode classification model, where the output of the photographing mode classification model includes the at least two candidate photographing types and the confidence degrees of the at least two photographing types, the photographing mode classification model is obtained by training a to-be-trained photographing mode classification model by using a photographing mode training set, and the photographing mode training set includes first training image data and a photographing type corresponding to the first training image data.

With reference to the second possible implementation of the second aspect, in a third possible implementation of the second aspect, the photographing mode training set further includes second training image data marked as being not corresponding to the photographing type.

With reference to any one of the second aspect or the possible implementations of the second aspect, in a fourth possible implementation of the second aspect, a type of the photographed scene is a food scene, and the processing module is configured to: increase contrast and color saturation of an image indicated by the image data at the second time point, to obtain the target image data.

With reference to any one of the second aspect or the possible implementations of the second aspect, in a fifth possible implementation of the second aspect, a type of the photographed scene is a blue-sky scene, and the processing module is configured to: calculate an adjustment coefficient based on a preset target blue-sky color value and a sky color value in an image indicated by the image data at the second time point; and process, based on the adjustment coefficient, the image indicated by the image data at the second time point, to obtain the target image data.

With reference to any one of the second aspect or the possible implementations of the second aspect, in a sixth possible implementation of the second aspect, a type of the photographed scene is a green plant scene, and the processing module is configured to: increase a color temperature and color saturation of an image indicated by the image data at the second time point, to obtain the target image data.

With reference to any one of the second aspect or the possible implementations of the second aspect, in a seventh possible implementation of the second aspect, the processing module is configured to: adjust a dynamic range and a pixel brightness value of an image indicated by the image data at the second time point, to increase the dynamic range of the image indicated by the image data at the second time point and repair an over-exposed area or an under-exposed area in the image indicated by the image data at the second time point, to obtain the target image data.

With reference to any one of the second aspect or the possible implementations of the second aspect, in an eighth possible implementation of the second aspect, the detection module is configured to: obtain an acceleration value of movement of the electronic apparatus in a time segment before a current time point; and determine whether an absolute value of the acceleration value is less than or equal to an acceleration threshold, and when the absolute value of the acceleration value is less than or equal to the acceleration threshold, the camera is currently in the stable photographing state, where the acceleration threshold is a real number greater than zero.

A third aspect of the present invention provides an electronic device, including: a camera, a memory, and a processor, where
the memory is configured to store a set of executable code; and
the processor is configured to execute the executable code stored in the memory, to perform the first aspect or any possible implementation of the first aspect.

A fourth aspect of the present invention provides a storage medium, the storage medium stores executable code, and when the executable code is executed, the first aspect or any possible implementation of the first aspect may be executed.

A fifth aspect of the present invention provides a computer program, and the computer program may perform the first aspect or any possible implementation of the first aspect.

A sixth aspect of the present invention provides a computer program product, and the computer program product includes an instruction that may perform the first aspect or any possible implementation of the first aspect.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1 shows a network environment including an electronic apparatus according to an embodiment of the present invention;
FIG. 2 is a schematic structural diagram of an electronic apparatus according to an embodiment of the present invention;
FIG. 3 is a schematic flowchart of a photographing method according to an embodiment of the present invention;
FIG. 4 is a schematic block diagram of an electronic apparatus according to an embodiment of the present invention; and
FIG. 5 is a schematic structural diagram of an electronic apparatus according to an embodiment of the present invention.

### DESCRIPTION OF EMBODIMENTS

The following clearly and completely describes the technical solutions in the embodiments of the present invention with reference to the accompanying drawings in the embodiments of the present invention.

An electronic apparatus may be an apparatus having a communication function. For example, the electronic apparatus may include at least one of the following: a terminal, a smartphone, a tablet personal computer (PC), a mobile phone, a videotelephony, an eReader, a desktop PC, a laptop PC, a netbook computer, a personal digital assistant (PDA), a portable multimedia player (PMP), a Moving Picture Experts Group (MPEG-1 or MPEG-2) audio layer 3 (MP3) player, a mobile medical apparatus, and a camera or a wearable apparatus (for example, a head mounted display (HMD) (for example, electronic glasses), electronic clothes, an electronic bracelet, an electronic necklace, an electronic application accessory, an electronic tattoo, and a smartwatch).

According to the embodiments of the present disclosure, the electronic apparatus may be an intelligent household appliance having a communication function. The intelligent household appliance may include at least one of the following: for example, a television (TV), a digital video disc (DVD) player, an audio player, a refrigerator, an air conditioner, a vacuum cleaner, an oven, an electric stove, a washing machine, an air purifier, a set top box, a TV box (for example, Samsung HomeSync™, Apple TV™, or Google TV™), a game console, an electronic dictionary, an electronic key, a video camera, or an electronic photo frame.

According to the embodiments disclosed in the present invention, the electronic apparatus may include at least one of the following: various medical apparatuses (for example, magnetic resonance angiography (MRA), magnetic resonance imaging (MRI), computerized tomography (CT), a photographing apparatus, and an ultrasonic apparatus), a navigation apparatus, a global positioning system (GPS) receiver, an event data recorder (EDR), a flight data recorder (FDR), a vehicle information entertainment apparatus, an electronic apparatus used for a ship (for example, a navigation apparatus and a gyrocompass used for a ship), an aeronautical electronic apparatus, a security apparatus, a header unit used for a vehicle, a robot used for an industrial purpose or a household purpose, an automatic teller machine (ATM) of a financial institution, or a point of sale of a store.

According to the embodiments disclosed in the present invention, the electronic apparatus may include at least one of the following: a part of a piece of furniture or an architecture/a structure having a communication function, an electronic board, an electronic signature receiving apparatus, a projector, or various measurement apparatuses (for example, a waterworks, electric power, fuel gas, or radio wave measurement apparatus). The electronic apparatus may be one of the foregoing apparatuses or a combination of a plurality of the foregoing apparatuses. Moreover, the electronic apparatus may be a flexible apparatus. In addition, it is obvious for a person skilled in the art that, the electronic apparatus is not limited to the foregoing apparatuses.

In the following description, the electronic apparatus is described with reference to the accompanying drawings. A term "user" used in the embodiments of the present disclosure may indicate a person using the electronic apparatus or an apparatus using the electronic apparatus (for example, an artificial intelligence electronic apparatus).

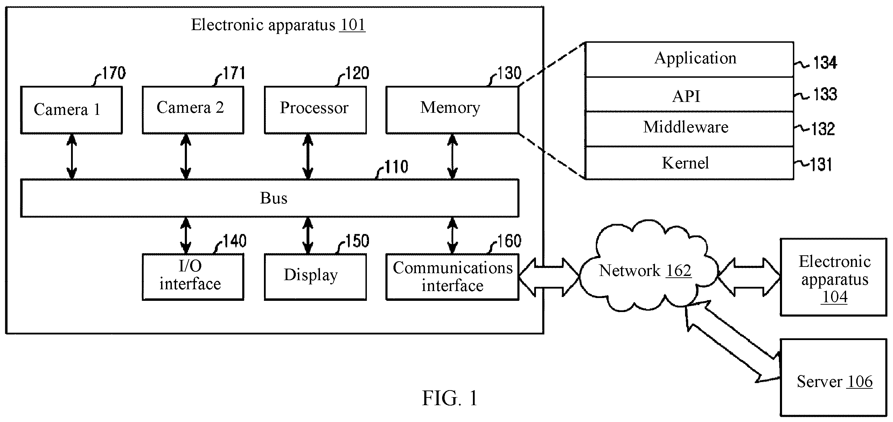

FIG. 1 shows a network environment including an electronic apparatus according to an embodiment of the present invention.

Referring to FIG. 1, the electronic apparatus 101 may include a bus 110, a processor 120, a memory 130, an input/output (I/O) interface 140, a display 150, a communications interface 160, a first camera 170, a second camera 171, and the like. The first camera 170 and the second camera 171 may alternatively be referred to as a first camera module and a second camera module, or a first image photographing module and a second image photographing module. It should be understood that, the electronic apparatus 101 may alternatively merely include the first camera 170 and not include the second camera 171.

The first camera 170 may be a front-end camera that photographs an image in front of the display 150, and the second camera 171 may be a rear-end camera that photographs an image behind the display 150 and may cooperate with the processor 120. The bus 110 may be a circuit that connects the foregoing elements to each other and transmits communications (for example, control messages) between the elements. In another implementation, the first camera 170 and the second camera 171 may each be a rear-end camera and may cooperate with the processor 120.

The processor 120 may receive (for example) an instruction from another element described above (for example, the memory 130, the I/O interface 140, the display 150, or the communications interface 160) by using the bus 110, decode the received instruction, and perform an operation or data processing corresponding to the decoded instruction.

The memory 130 may store an instruction or data received from the processor 120 or another element (for example, the I/O interface 140, the display 150, or the communications interface 160) or an instruction or data generated by the processor 120 or another element. The memory 130 may include (for example) a programming module, for example, a kernel 131, middleware 132, an application programming interface (API) 133, or an application 134. The programming module may be configured by using software, firmware, or hardware, or a combination of two or more of software, firmware, or hardware.

The kernel 131 may control or manage a system resource (for example, the bus 110, the processor 120, or the memory 130) that is configured to perform an operation or a function implemented in another programming module (for example, the middleware 132, the API 133, or the application 134). In addition, the kernel 131 may provide an interface that allows the middleware 132, the API 133, or the application 134 to access each element of the electronic apparatus 101 and control or manage the element.

The middleware 132 may perform an intermediation function, so that the API 133 or the application 134 may communicate with the kernel 131 to provide and obtain data. In addition, associated with a task request received from the application 134, the middleware 132 may control (for example, schedule or balance load of) the task request by using (for example) a method of allocating, to at least one of the application 134, a priority of the system resource (for example, the bus 110, the processor 120, or the memory 130) that may use the electronic apparatus.

The API 133 is an interface that allows the application 134 to control functions provided by the kernel 131 or the middleware 132, and may include at least one interface or function (for example, an instruction) used for file control, window control, and image processing or character control.

According to the embodiments of the present disclosure, the application 134 may include a short messaging service (SMS)/multimedia messaging service (MMS) application, an email application, a calendar application, an alarm application, a healthcare application (for example, an application used to measure an amount of exercise or a blood glucose), or an environment information application (for example, an application providing information about an atmospheric pressure, a humidity, or a temperature). Additionally or optionally, the application 134 may be an application related to information exchange between the electronic apparatus 101 and an external electronic apparatus (for example, an electronic apparatus 104). The application related to information exchange may include (for example) a notification relay application used to transmit particular information to the external electronic apparatus or an apparatus management application used to manage the external electronic apparatus.

For example, the notification relay application may have a function used to transmit, to the external electronic apparatus (for example, the electronic apparatus 104), notification information generated by different applications (for example, the SMS/MMS application, the email application, the healthcare application, or the environment information application) of the electronic apparatus 101. Additionally or optionally, for example, the notification relay application may receive the notification information from the external electronic apparatus (for example, the electronic apparatus 104) and provides the notification information to the user. The apparatus management application may manage (for example, install, delete, or update) functions (for example, turning-on/turning-off of the external electronic apparatus (or some components) or brightness (or a resolution) control of the display) and applications that operate in the external electronic apparatus and services (for example, a communication service or a message service) provided by the external electronic apparatus.

According to the embodiments of the present disclosure, the application 134 may include an application specified according to an attribute (for example, a type of the electronic apparatus) of the external electronic apparatus (for example, the electronic apparatus 104). For example, if the external electronic apparatus is an MP3 player, the application 134 may include an application related to music re-playback. Similarly, if the external electronic apparatus is a mobile medical healthcare apparatus, the application 134 may include an application related to healthcare. According to this embodiment of the present disclosure, the application 134 may include at least one of the application specified in the electronic apparatus 101 and the application received from the external electronic apparatus (for example, a server 106 or the electronic apparatus 104).

The I/O interface 140 may transmit, to the processor 120, the memory 130, and the communications interface 160 by using (for example) the bus 110, an instruction or data that is input by the user by using an I/O unit (for example, a sensor, a keyboard, or a touchscreen). For example, the I/O interface 140 may provide, for the processor 120, user touch data input by using the touchscreen. In addition, for example, the I/O interface 140 may output, by using an I/O unit (for example, a speaker or a display), the instruction or data that is received by using the bus 110 from the processor 120, the memory 130, and the communications interface 160. For example, the I/O interface 140 may output, to the user by using the speaker, voice data processed by the processor 120.

The display 150 may display various information (for example, multimedia data or text data) to the user. The communications interface 160 may connect the electronic apparatus 101 and the external apparatus (for example, the electronic apparatus 104 or the server 106) for communication. For example, the communications interface 160 may be connected to a network 162 through wireless communication or wired communication, to communicate with the external apparatus. The wireless communication may include (for example) at least one of wireless fidelity (Wi-Fi), Bluetooth (BT), near field communication (NFC), GPS or cellular communication (for example, Long Term Evolution (LTE), LTE Advanced (LTE-A), Code Division Multiple Access (CDMA), broadband CDMA (WCDMA), Universal Mobile Telecommunications System (UMTS), wireless broadband (WiBro), or Global System for Mobile Communications (GSM)). The wired communication may include at least one of Universal Serial Bus (USB), high definition multimedia interface (HDMI), recommended standard 232 (RS-232), and plain old telephone service (POTS).

According to this embodiment of the present disclosure, the network 162 may be a telecommunication network. The telecommunication network may include at least one of a computer network, Internet, Internet of Things, and a telephone network. According to this embodiment of the present disclosure, a protocol (for example, a transport layer protocol, a data link layer protocol, or a physical layer protocol) for communication between the electronic apparatus 101 and the external apparatus may be supported by at least one of the application 134, the application programming interface 133, the middleware 132, the kernel 131, or the communications interface 160.

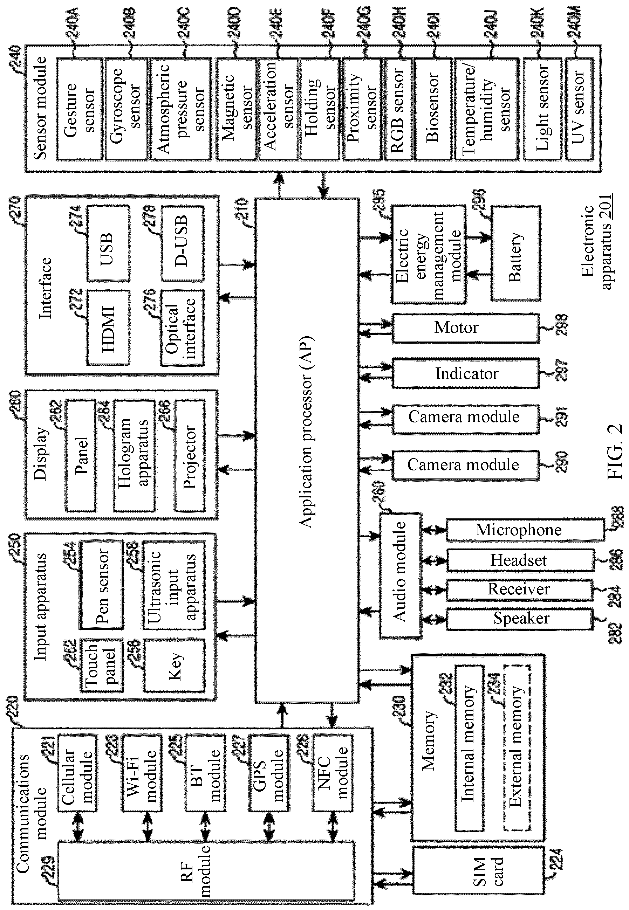

FIG. 2 is a schematic structural diagram of an electronic apparatus according to an embodiment of the present invention. For example, the electronic apparatus may be provided with all of or a part of the electronic apparatus 101 shown in FIG. 1.

Referring to FIG. 2, the electronic apparatus 201 may include one or more application processors (AP) 210, a communications module 220, a subscriber identity module (SIM) card 224, a memory 230, a sensor module 240, an input unit 250, a display 260, an interface 270, an audio module 280, a first camera module 290, a second camera module 291, an electric energy management module 295, a battery 296, an indicator 297, and a motor 298.

The AP 210 may drive an operating system (OS) or an application to control a plurality of hardware or software elements connected to the AP 210, and perform processing and operations on various data including multimedia data. For example, the AP 210 may be implemented as a system on-a-chip (SoC). According to this embodiment of the present disclosure, the AP 210 may further include a graphics processing unit (GPU) (not shown).

The communications module 220 (for example, the communications interface 160) may perform data sending/receiving in communication between the electronic apparatus 201 (for example, the electronic apparatus 101) and other electronic apparatuses (for example, the electronic apparatus 104 or the server 106) that are connected by using a network. According to this embodiment of the present disclosure, the communications module 220 may include a cellular module 221, a Wi-Fi module 223, a BT module 225, a GPS module 227, an NFC module 228, and a radio frequency (RF) module 229.

The cellular module 221 may provide audio communication, image communication, a short message service, or an Internet service by using a communications network (for example, LTE, LTE-A, CDMA, WCDMA, UMTS, WiBro, or GSM). In addition, the cellular module 221 may perform identification and authentication on the electronic apparatus in the communications network by using (for example) a subscriber identity module (for example, the SIM card 224). According to this embodiment of the present disclosure, the cellular module 221 may perform at least some functions provided by the AP 210. For example, the cellular module 221 may perform at least some multimedia control functions.

According to this embodiment of the present disclosure, the cellular module 221 may include a communications processor (CP). In addition, for example, the cellular module 221 may be implemented as a SoC. Although in FIG. 2, the elements (for example, the cellular module 221 (for example, the communications processor), the memory 230, and the electric energy management module 295) are shown as elements independent of the AP 210, the AP 210 may be implemented as an element including at least some of the foregoing elements (for example, the cellular module 221).

According to this embodiment of the present disclosure, the AP 210 or the cellular module 221 (for example, the communications processor) may load, to a volatile memory, an instruction or data received from at least one of a non-volatile memory and other elements that are connected to the AP 210 or the cellular module 221, and process the instruction or data. In addition, the AP 210 or the cellular module 221 may store, in the non-volatile memory, data received from at least one of the other elements or data generated by at least one of the other elements.

The Wi-Fi module 223, the BT module 225, the GPS module 227, or the NFC module 228 each may include (for example) a processor that is configured to process data sent/received by using related modules. Although in FIG. 2, the cellular module 221, the Wi-Fi module 223, the BT module 225, the GPS module 227, or the NFC module 228 are shown as independent modules, at least some (for example, two or more elements) of the cellular module 221, the Wi-Fi module 223, the BT module 225, the GPS module 227, or the NFC module 228 may be included in an integrated circuit (IC) or an IC package. For example, at least some of processors corresponding to the cellular module 221, the Wi-Fi module 223, the BT module 225, the GPS module 227, and the NFC module 228 (for example, a communications processor corresponding to the cellular module 221 and a Wi-Fi processor corresponding to the Wi-Fi module 223) may be implemented as a SoC.

The RF module 229 may send/receive data, for example, send/receive an RF signal. Although not shown, the RF module 229 may include (for example) a transceiver, a power amplifier module (PAM), a frequency filter, or a low noise amplifier (LNA). In addition, the RF module 229 may further include a component (for example, a conductor and a conducting wire) configured to send/receive an electromagnetic wave in free space in wireless communication. Although the cellular module 221, the Wi-Fi module 223, the BT module 225, the GPS module 227, and the NFC module 228 in FIG. 2 share one RF module 229, at least one of the cellular module 221, the Wi-Fi module 223, the BT module 225, the GPS module 227, or the NFC module 228 may send/receive an RF signal by using a separate RF module.

The SIM card 224 may be a card including a subscriber identity module, and may be inserted into a slot that is formed at a particular position of the electronic apparatus. The SIM card 224 may include unique identification information (for example, an integrated circuit card identifier (ICCID)) or user information (for example, an international mobile subscriber identity (IMSI)).

The memory 230 (for example, the memory 130) may include an embedded memory 232 or an external memory 234. The embedded memory 232 may include (for example) at least one of a volatile memory (for example, a dynamic random access memory (DRAM), a static RAM (SRAM), a synchronous dynamic RAM (SDRAM)) and a non-volatile memory (for example, a one time programmable read-only memory (OTPROM), a programmable ROM (PROM), an erasable programmable ROM (EPROM), an electrically erasable programmable ROM (EEPROM), a mask ROM, a flash ROM, and a NAND (NAND) flash, or a NOR (NOR) flash).

According to this embodiment of the present disclosure, the embedded memory 232 may be a solid-state driver (SSD). The external memory 234 may further include a flash driver (for example, a compact flash (CF), a security digital (SD), a micro-security digital (Micro-SD), a mini-security digital (Mini-SD), an extremity digital (xD), or a memory stick). The external memory 234 may be functionally connected to the electronic apparatus 201 by using various interfaces. According to this embodiment of the present disclosure, the electronic apparatus 201 may further include a storage apparatus (or a storage medium), for example, a hard disk drive.

The sensor module 240 may measure a physical quantity or detect an operating status of the electronic apparatus 201, and convert the measured or detected information into an electrical signal. The sensor module 240 may include (for example) at least one of the following: a gesture sensor 240A, a gyroscope sensor 240B, an atmospheric pressure sensor 240C, a magnetic sensor 240D, an acceleration sensor 240E, a holding sensor 240F, a proximity sensor 240G, a color sensor 240H (for example, a Red-Green-Blue (RGB) sensor), a living body sensor 2401, a temperature/humidity sensor 240J, an illuminance sensor 240K, or an ultraviolet (UV) sensor 240M. Additionally or optionally, the sensor module 240 may include (for example) an electronic nose sensor (not shown), an electromyography (EMG) sensor (not shown), an electroencephalograph (EEG) sensor (not shown), an electrocardiograph (ECG) sensor (not shown), an infrared radiation (IR) sensor (not shown), an iris sensor (not shown), or a fingerprint sensor (not shown). The sensor module 240 may further include a control circuit configured to control at least one sensor belonging to the sensor module 240.

The input apparatus 250 may include a touch panel 252, a (digital) pen sensor 254, a key 256, or an ultrasonic input apparatus 258. The touch panel 252 may detect a touch input by using at least one of a capacitance method, a resistance method, an infrared radiation method, or an ultrasonic method. In addition, the touch panel 252 may further include a control circuit. A capacitance touch panel may perform physical contact detection or proximity detection. The touch panel 252 may further include a tactile layer. In this case, the touch panel 252 may provide a tactile reaction for the user.

For example, a method the same as or similar to a method for receiving a touch input of the user may be used, or a panel implementing (digital) pen sensor 254 separately used for detection is used. The key 256 may include (for example) a physical button, an optical key or a key area. The ultrasonic input unit 258 is an input tool that identifies data by detecting a sound wave by using a microphone (for example, a microphone 288) in the electronic apparatus 201, and can perform wireless detection, where the ultrasonic input unit 258 generates an ultrasonic signal. According to this embodiment of the present disclosure, the electronic apparatus 201 may receive a user input by using the communications module 220 from the external apparatus (for example, a computer or a server) connected to the communications module 220.

The display 260 (for example, the display 150) may include a panel 262, a hologram apparatus 264, or a projector 266. The panel 262 may be (for example) a liquid crystal display (LCD), or an active-matrix organic light-emitting diode (AM-OLED). For example, the panel 262 may be implemented as flexible, translucent, or wearable. The panel 262 and the touch panel 252 may be configured into a module. The hologram apparatus 264 may display a three-dimensional image in air through interference of light. The projector 266 may project the light to a screen to display an image. For example, the screen may be located inside or outside the electronic apparatus 201. According to this embodiment of the present disclosure, the display 260 may further include a control circuit configured to control the panel 262, the hologram apparatus 264, or the projector 266.

The interface 270 may include (for example) an HDMI 272, a USB 274, an optical interface 276, or a D-sub (D-sub) 278. The interface 270 may be included in (for example) the communications interface 160 shown in FIG. 1. Additionally or optionally, the interface 270 may include a mobile high-definition link (MHL) interface, an SD card/a multimedia card (MMC) interface, or an Infrared Data Association (IrDA) standard interface.

The audio module 280 may bi-directionally convert sound and electrical signals. At least a part of the audio module 280 may be included in (for example) the I/O interface 140 shown in FIG. 1. The audio module 280 may process sound information that is input or output by using (for example) a speaker 282, a receiver 284, a headset 286, or the microphone 288.

The first camera module 290 and the second camera module 291 may each be an apparatus that can photograph a still image and a moving picture, and may be manufactured as one module. According to this embodiment of the present disclosure, the first camera module 290 and the second camera module 291 may include one or more image sensors (for example, a front sensor or a back sensor), a lens (not shown), an image signal processor (ISP) (not shown), or a camera flash (for example, an LED or a xenon lamp). The electric energy management module 295 may manage electric energy of the electronic apparatus 201. Although not shown, the electric energy management module 295 may include (for example) an electric energy management integrated circuit (PMIC), a charger integrated circuit (IC), a battery gauge, or a fuel gauge.

For example, the PMIC may be mounted inside the integrated circuit or a SoC semiconductor. A charging method may be classified into a wired charging method and a wireless charging method. The charging IC may charge the battery and may prevent introduction of an overvoltage or an over current from the charger. According to this embodiment of the present disclosure, the charging IC may include a charging IC applied to at least one of the wired charging method and the wireless charging method. The wireless charging method may be (for example) a magnetic resonance method, a magnetic induction method, or an electromagnetic wave method, and may additionally include an additional circuit used for wireless charging, for example, a circuit (for example, a coil ring, a resonant circuit, or a rectifier).

The battery gauge may measure (for example) a remaining quantity of electricity of the battery 296 and a voltage, a current, or a temperature of the battery 296 during charging. The battery 296 may store or generate electricity, and supply the stored or generated electricity to the electronic apparatus 201. The battery 296 may include (for example) a rechargeable battery or a solar cell.

The indicator 297 may display a particular state, for example, a start state, a message state, or a charging state of the electronic apparatus 201 or a part of the electronic apparatus 201 (for example, the AP 210). The motor 298 may convert an electrical signal into mechanical vibration. Although not shown, the electronic apparatus 201 may include a processor (for example, a GPU) configured to support a mobile TV. The processor configured to support a mobile TV may process media data corresponding to a standard (for example, digital multimedia broadcasting (DMB), digital video broadcasting (DVB), and a media stream).

Each of the foregoing elements on the electronic apparatus may be configured by using one or more components, and names of related elements may be changed according to a type of the electronic apparatus. The electronic apparatus may include at least one of the foregoing elements, and some of the elements may be omitted or other additional elements may further be included. In addition, some of the elements on the electronic apparatus may be combined to form an entity, and the entity similarly performs functions of the related elements before the elements are combined.

In the following description, a photographing method of an electronic apparatus and the electronic apparatus are described. The electronic apparatus may be an electronic apparatus (for example, a smartphone and a tablet PC) and may include all or some of the elements shown in FIG. 1 and FIG. 2.

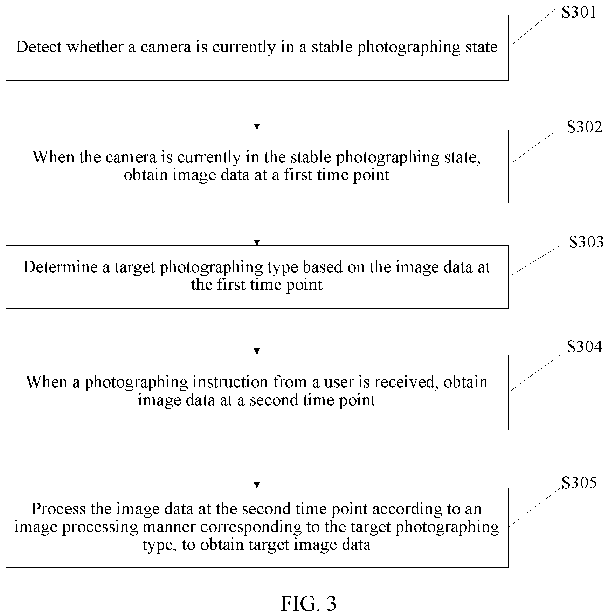

FIG. 3 is a schematic flowchart of a photographing method. The method may be performed by the electronic apparatus (which may be specifically a terminal) in the foregoing description, and the electronic apparatus includes a camera. The camera may be configured to convert light incident to a lens of the camera, to obtain (or referred to as obtaining through photographing) image data. The camera may be a camera lens, a camera module, or a lens module in a mobile phone, or may be at least one of the first camera 170 or the second camera 171, or at least one of the first camera module 290 and the second camera module 291. Steps of the method are as follows.

S301. Detect whether the camera is currently in a stable photographing state. Detection herein may be real-time detection. In a specific implementation process, the detecting whether the camera is currently in a stable photographing state may include: obtaining an acceleration value of movement of the camera or the electronic apparatus in a time segment before a current time point; and determining whether an absolute value of the acceleration value is less than or equal to an acceleration threshold, and when the absolute value of the acceleration value is less than or equal to the acceleration threshold, the camera is currently in the stable photographing state, where the acceleration threshold is a real number greater than zero.

The acceleration value of movement in the time segment before the current time point may be a value or a group of values (that is, at least two values). A manner of obtaining the acceleration value may be that an acceleration value is obtained at every other sampling interval in the time segment, to obtain a group of acceleration values. Duration of the sampling interval may be preset.

Duration of the time segment before the current time point may be preset. The acceleration threshold may also be preset.

The obtaining an acceleration value of movement of the camera or the electronic apparatus in a time segment before a current time point may be obtaining, by a gyroscope sensor in the electronic apparatus, the acceleration value of movement of the camera or the electronic apparatus in the time segment before the current time point. More accurately, the acceleration value obtained by using the gyroscope is an angular acceleration value. In a specific implementation process, the gyroscope sensor may be a three-axial gyroscope sensor, and angular acceleration values in three directions are obtained by using the three-axial gyroscope sensor. When absolute values of the angular acceleration values obtained by the three-axial gyroscope sensor in the three directions in the time segment before the current time point are all less than or equal to the acceleration threshold, the camera is in the stable photographing state. There may be three acceleration thresholds, respectively corresponding to the angular acceleration values in the three directions.

The obtaining an acceleration value of movement of the camera or the electronic apparatus in a time segment before a current time point may be obtaining, by an acceleration sensor in the electronic apparatus, the acceleration value of movement of the camera or the electronic apparatus in the time segment before the current time point. In a specific implementation process, the acceleration sensor may be a three-axial acceleration sensor. Acceleration values in three directions may be obtained by using the three-axial acceleration sensor, and a gravity acceleration value corresponding to gravity in an environment in which the electronic apparatus is currently located is subtracted from an acceleration value in a vertical direction, to obtain an acceleration value of movement of the camera or the electronic apparatus in the vertical direction. Acceleration values in other directions may not be processed, and when absolute values of the acceleration values of movement of the electronic device in the three directions in the time segment before the current time point are all less than or equal to the acceleration threshold, the camera is in the stable photographing state. There may be three acceleration thresholds, respectively corresponding to the acceleration values in the three directions. The gravity acceleration value may be preset, or may be obtained by using a gravity sensor. Alternatively, the gravity acceleration value corresponding to the gravity of the environment in which the electronic apparatus is currently located may be determined based on an atmospheric pressure that is obtained by an atmospheric pressure sensor in the electronic apparatus.

In a specific implementation process, alternatively, the detecting whether the camera is currently in a stable photographing state may include: obtaining image data at the current time point; comparing the image data at the current time point with image data obtained at a previous time point of the current time point; and when a matching degree between the image data at the current time point and the image data at the previous time point is greater than a matching threshold, the camera is currently in the stable photographing state. The matching threshold may be preset. The obtaining image data at the current time point may include obtaining the image data at the current time point by using the camera, where the image data at the previous time point is also obtained by using the camera.

S302. When the camera is currently in the stable photographing state, obtain image data at a first time point. In a specific implementation process, the image data at the first time point may be obtained by the camera of the electronic apparatus. The camera may generate two image data streams. One image data stream may include image data for displaying, that is, for previewing. The other image data stream may include image data for picture storage, that is, for photographing. A resolution of an image indicated by the image data for displaying is less than a resolution of the image data for picture storage. The image data at the first time point may be the image data for displaying. The obtaining image data at a first time point may be obtaining the image data at the first time point by using the camera.

S303. Determine a target photographing type based on the image data at the first time point. The target photographing type may be used to indicate a type of a photographed scene indicated by the image data at the first time point.

The determining a target photographing type based on the image data at the first time point may include: determining, based on the image data at the first time point, at least two candidate photographing types of the photographed scene and confidence degrees of the at least two photographing types; and determining the target photographing type in the at least two photographing types based on the confidence degrees of the at least two photographing types. In a specific implementation process, downsampling may further be performed on the image data at the first time point, to obtain downsampled image data, and then the target photographing type corresponding to the image data at the first time point is determined based on the downsampled image data.

In a specific implementation, the determining, based on the image data at the first time point, at least two candidate photographing types of the photographed scene and confidence degrees of the at least two photographing types may include: obtaining, by using the image data at the first time point (or the downsampled data of the image data at the first time point) as an input of a photographing mode classification model, an output of the photographing mode classification model, where the output of the photographing mode classification model includes the at least two candidate photographing types and the confidence degrees of the at least two photographing types, the photographing mode classification model is obtained by training a to-be-trained photographing mode classification model by using a photographing mode training set, and the photographing mode training set includes first training image data and a photographing type corresponding to the first training image data. The photographing mode training set may further include second training image data marked as being not corresponding to the photographing type.

In a specific implementation process, a type of the to-be-trained photographing mode classification model may be VGGnet, alexnet, inception resnet, resnet, densenet, or mobilenet. The training a to-be-trained photographing mode classification model by using a photographing mode training set may be: updating a coefficient in the to-be-trained photographing mode classification model by using the photographing mode training set.

In another implementation, the determining a target photographing type based on the image data at the first time point may alternatively include: obtaining, by using the image data at the first time point (or the downsampled data of the image data at the first time point) as an input of a photographing mode classification model, an output of the photographing mode classification model, where the output of the photographing mode classification model is used as a target photographing mode, the output of the photographing mode classification model includes area information of at least two image areas in an image indicated by the image data at the first time point and photographing types respectively corresponding to the at least two image areas (which may alternatively be one image area), the photographing mode classification model is obtained by training a to-be-trained photographing mode classification model by using a photographing mode training set, and the photographing mode training set includes area information of at least two image areas in an image indicated by third training image data and photographing types respectively corresponding to the at least two image areas. The photographing mode training set may further include fourth training image data marked as being not corresponding to the photographing type. The photographing mode training set may further include fifth training image data corresponding to the photographing type. The area information may be used to indicate an area range corresponding to an image area corresponding to the area information, and the area information may be a segmentation mask (or referred to as a mask, mask). When the image area is divided, the image may be segmented based on pixels or super pixels. It should be noted that, compared with the photographing mode classification model in the foregoing description, the photographing mode classification model in this paragraph may be another photographing mode classification model.

In another implementation, the output of the photographing mode classification model may alternatively include area information of at least two image areas in an image indicated by the image data at the first time point, at least two candidate photographing types corresponding to each of the at least two image areas, and confidence degrees of the at least two candidate photographing types. A target photographing type corresponding to each image area may be determined, based on the confidence degrees of the at least two candidate photographing types, in the at least two candidate photographing types corresponding to each image area.

S304. When or after a photographing instruction from a user is received, obtain image data at a second time point. The image data at the second time point may be the image data for picture storage. The receiving a photographing instruction from a user may be performed by the electronic apparatus. Specifically, it may be detected whether the user clicks or presses down a key or a virtual key (displayed on a display) used to indicate a shutter, and when the user clicks or presses down the key or the virtual key, it means that the photographing instruction from the user is received. The obtaining image data at a second time point may be obtaining the image data at the second time point by using the camera.

S305. Process the image data at the second time point according to an image processing manner corresponding to the target photographing type, to obtain target image data. In a specific implementation process, the processing the image data at the second time point may include: controlling hardware in the camera (for example, changing an aperture value and a focal length of a lens in the camera by changing a structure of the hardware), or processing the image data obtained by the camera. The processing the image data obtained by the camera may be implemented by using hardware (for example, by using an image signal processor ISP) or software.

A type of the photographed scene may be a food scene, and the processing the image data at the second time point according to an image processing manner corresponding to the target photographing type, to obtain target image data may include: increasing contrast and color saturation of an image indicated by the image data at the second time point, to obtain the target image data.

A type of the photographed scene may be a night scene, and the processing the image data at the second time point according to an image processing manner corresponding to the target photographing type, to obtain target image data may include: adjusting a dynamic range and a pixel brightness value of an image indicated by the image data at the second time point, to increase the dynamic range of the image indicated by the image data at the second time point and repair an over-exposed area or an under-exposed area in the image indicated by the image data at the second time point, to obtain the target image data. In a specific implementation process, the pixel brightness value of the image indicated by the image data at the second time point may be adjusted by calling a brightness parameter (for example, auto-exposure (AE)) of an ISP.

A type of the photographed scene may be a blue-sky scene, and the processing the image data at the second time point according to an image processing manner corresponding to the target photographing type, to obtain target image data may include: calculating an adjustment coefficient based on a preset target blue-sky color value and a sky color value in an image indicated by the image data at the second time point; and processing, based on the adjustment coefficient, the image indicated by the image data at the second time point, to obtain the target image data.

A type of the photographed scene may be a green plant scene, and the processing the image data at the second time point according to an image processing manner corresponding to the target photographing type, to obtain target image data may include: increasing a color temperature and color saturation of an image indicated by the image data at the second time point, to obtain the target image data. In a specific implementation process, the color temperature of the image indicated by the image data at the second time point may be adjusted by calling a white balance parameter (for example, auto-white balance (AWB)) of an ISP.

A type of the photographed scene may be a stage scene, and the processing the image data at the second time point according to an image processing manner corresponding to the target photographing type, to obtain target image data may include: adjusting a dynamic range and a pixel brightness value of an image indicated by the image data at the second time point, to increase the dynamic range of the image indicated by the image data at the second time point and repair an over-exposed area or an under-exposed area in the image indicated by the image data at the second time point, to obtain the target image data.

It may be understood that, for more photographing methods, refer to the related descriptions of the summary, and details are not described herein again.

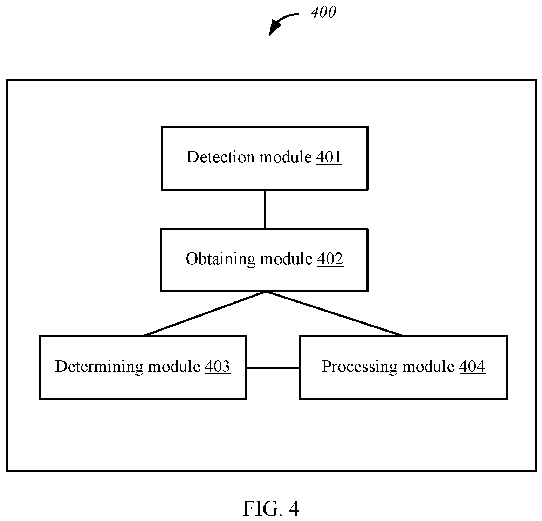

As shown in FIG. 4, an embodiment of the present invention provides an electronic apparatus 400. The electronic apparatus 400 may be the electronic apparatus 101 or 201 in the foregoing description, or the electronic apparatus 400 may include some elements or modules in the electronic apparatus 101 and/or the electronic apparatus 201. The apparatus includes a detection module 401, an obtaining module 402, a determining module 403, and a processing module 404. Operations performed by the modules in the apparatus may be implemented by software, or may serve as software modules that are located in a memory of the electronic apparatus 400 and that are invoked and executed by a processor. Alternatively, the operations performed by the modules in the apparatus may be implemented by hardware chips.

The detection module 401 is configured to detect whether the camera is currently in a stable photographing state. The electronic apparatus 400 includes a camera, and the camera may be at least one of a camera lens, the first camera 170, the second camera 171, the first camera module 290, and the second camera module 291. The detection module 401 may be implemented by software programming. In other words, the detection module 401 may serve as a software module that is located in the memory of the electronic apparatus 400 and that is invoked and executed by the processor.

In a specific implementation process, the detection module 401 may obtain an acceleration value of movement of the camera or the electronic apparatus in a time segment before a current time point by using a gyroscope sensor in the electronic apparatus 400; and determine whether an absolute value of the acceleration value is less than or equal to an acceleration threshold, and when the absolute value of the acceleration value is less than or equal to the acceleration threshold, the camera is currently in the stable photographing state.

In a specific implementation process, alternatively, the detection module 401 may obtain image data at the current time point by using the camera; compare the image data at the current time point with image data obtained at a previous time point of the current time point; and when a matching degree between the image data at the current time point and the image data at the previous time point is greater than a matching threshold, the camera is currently in the stable photographing state.

The obtaining module 402 is configured to: when the camera is currently in the stable photographing state, obtain image data at a first time point. The obtaining module 402 may be the camera in the foregoing description, that is, the obtaining module may be at least one of the camera lens, the first camera 170, the second camera 171, the first camera module 290, and the second camera module 291. Alternatively, the obtaining module 402 may obtain the image data at the first time point by using the camera.

The determining module 403 is configured to determine a target photographing type based on the image data that is obtained by the obtaining unit at the first time point.

The determining module 403 may be configured to: determine, based on the image data at the first time point, at least two candidate photographing types of the photographed scene and confidence degrees of the at least two photographing types; and determine the target photographing type in the at least two photographing types based on the confidence degrees of the at least two photographing types. Specifically, the determining module 403 may be configured to obtain, by using the image data at the first time point as an input of a photographing mode classification model, an output of the photographing mode classification model, where the output of the photographing mode classification model includes the at least two candidate photographing types and the confidence degrees of the at least two photographing types, the photographing mode classification model is obtained by training a to-be-trained photographing mode classification model by using a photographing mode training set, and the photographing mode training set includes first training image data and a photographing type corresponding to the first training image data. The photographing mode training set further includes second training image data marked as being not corresponding to the photographing type.

The obtaining module 402 is further configured to: when a photographing instruction from a user is received, obtain image data at a second time point.

The processing module 404 is configured to process the image data at the second time point according to an image processing manner corresponding to the target photographing type that is determined by the determining unit, to obtain target image data. The processing module 404 may be implemented by software programming. In other words, the processing module 404 may serve as a software module that is located in the memory of the electronic apparatus 400 and that is invoked and executed by the processor. The processing module may be at least one of the first camera module 290 and the second camera module 291 that both have an ISP, and an operation of the processing module 404 is performed by the ISP. Alternatively, the processing module 404 includes the software module in the memory and at least one of the first camera module 290 and the second camera module 291.

A type of the photographed scene is a food scene, and the processing module 404 may be configured to increase contrast and color saturation of an image indicated by the image data at the second time point, to obtain the target image data.

A type of the photographed scene is a blue-sky scene, and the processing module 404 may be configured to: calculate an adjustment coefficient based on a preset target blue-sky color value and a sky color value in an image indicated by the image data at the second time point; and process, based on the adjustment coefficient, the image indicated by the image data at the second time point, to obtain the target image data.

A type of the photographed scene is a green plant scene, and the processing module 404 may be configured to increase a color temperature and color saturation of an image indicated by the image data at the second time point, to obtain the target image data.

A type of the photographed scene is a stage scene, and the processing module 404 may be configured to adjust a dynamic range and a pixel brightness value of an image indicated by the image data at the second time point, to increase the dynamic range of the image indicated by the image data at the second time point and repair an over-exposed area or an under-exposed area in the image indicated by the image data at the second time point, to obtain the target image data.

It may be understood that, for more execution operations of each module of the electronic apparatus in this embodiment, refer to the related description of the foregoing method embodiments and the summary, and details are not described herein again.

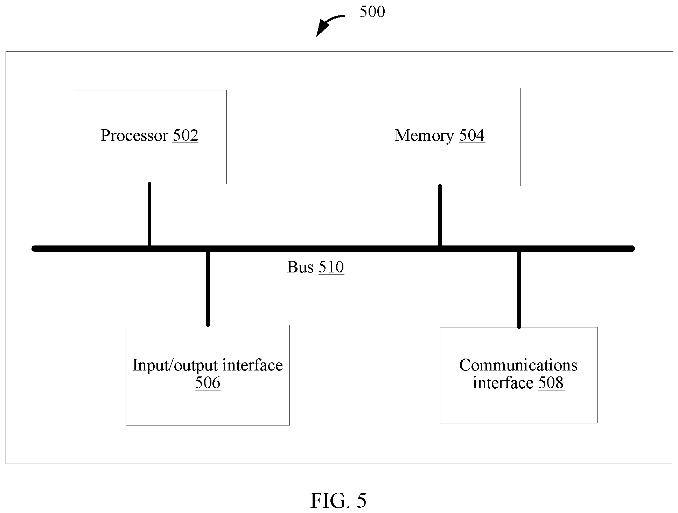

FIG. 5 is a schematic structural diagram of hardware of an electronic apparatus 500 according to an embodiment of the present invention. The electronic apparatus 500 may include all or some elements or modules in the electronic apparatus 101 and the electronic apparatus 201. As shown in FIG. 5, the electronic apparatus 500 may serve as an implementation of the electronic apparatus 400, and the electronic apparatus 500 includes a processor 502, a memory 504, an input/output interface 506, a communications interface 508, and a bus 510. The processor 502, the memory 504, the input/output interface 506, and the communications interface 508 are in communication connection with each other by using the bus 510.

The processor 502 may be a general-purpose central processing unit (Central Processing Unit, CPU), a microprocessor, an application-specific integrated circuit (Application Specific Integrated Circuit, ASIC), or one or more integrated circuits, to execute related programs to implement the functions performed by the modules included in the electronic apparatus 400 that is provided in the embodiments of the present invention, or perform the photographing method provided in the method embodiments and the summary of the present invention. The processor 502 may be an integrated circuit chip and has a signal processing capability. In an implementation process, each step of the foregoing methods may be implemented by an integrated logic circuit in a hardware form in the processor 502 or by an instruction in a software form. The processor 502 may be a general-purpose processor, a digital signal processor (DSP), an application-specific integrated circuit (ASIC), a field-programmable gate array (FPGA) or another programmable logic component, a discrete gate or a transistor logic device, or a discrete hardware component, and may implement or perform methods, steps, and logical block diagrams disclosed in the embodiments of the present invention. The general-purpose processor may be a microprocessor or the processor may be any conventional processor, or the like. The steps in the methods disclosed in the embodiments of the present invention may be directly implemented by using a hardware decoding processor, or may be implemented by using a combination of hardware and software modules in a decoding processor. The software module may be located in a mature storage medium in the art, for example, a random access memory, a flash memory, a read-only memory, a programmable read-only memory, an electrically-erasable programmable memory, or a register. The storage medium is located in the memory 504, and the processor 502 reads information in the memory 504 and completes the steps in the foregoing methods in combination with hardware of the processor.

The memory 504 may be a read-only memory (Read Only Memory, ROM), a static storage device, a dynamic storage device, or a random access memory (Random Access Memory, RAM). The memory 504 may store an operating system and another application program. When a function that needs to be performed by a module included in the electronic apparatus 400 that is provided in the embodiments of the present invention, or the photographing method provided in the method embodiments and the summary of the present invention is implemented by using software or firmware, program code used for implementing the technical solution provided in the embodiments of the present invention is stored in the memory 504, and the processor 502 performs the operation that needs to be performed by the module included in the electronic apparatus 400, or performs the photographing method provided in the method embodiments of the present invention.

The input/output interface 506 is configured to receive input data and information, and output data such as an operation result.

The communications interface 508 uses a transceiver apparatus, for example, but not limited to, a transceiver, to implement communication between the electronic apparatus 500 and other devices or communications networks.

The bus 510 may include a channel used for transmitting information between components (for example, the processor 502, the memory 504, the input/output interface 506, and the communications interface 508) of the electronic apparatus 500.

It should be noted that, although the electronic apparatus 500 shown in FIG. 5 merely shows the processor 502, the memory 504, the input/output interface 506, the communications interface 508, and the bus 510, in a specific implementation process, a person skilled in the art should understand that, the electronic apparatus 500 further includes other components necessary for normal operating, for example, a display, a camera, and a gyroscope sensor. In addition, a person skilled in the art should understand that according to a specific requirement, the electronic apparatus 500 may further include a hardware component for implementing another additional function. Moreover, a person skilled in the art should understand that the electronic apparatus 500 may merely include components necessary for implementing the embodiments of the present invention, and does not necessarily include all components shown in FIG. 5.

It should be noted that, for brief description, the foregoing method embodiments are expressed as a series of actions. However, a person skilled in the art should appreciate that the present invention is not limited to the described action sequence, because according to the present invention, some steps may be performed in other sequences or performed simultaneously. In addition, a person skilled in the art should understand that, actions and modules used in this specification are not necessary for the present invention.

A person of ordinary skill in the art may understand that all or some of the procedures of the methods in the embodiments may be implemented by a computer program instructing relevant hardware. The program may be stored in a computer readable storage medium. When the program runs, the procedures of the methods in the embodiments are performed. The foregoing storage medium may include: a magnetic disk, an optical disc, a read-only memory (Read-Only Memory, ROM), or a random access memory (Random Access Memory, RAM).

Although the present invention is described with reference to the embodiments, in a process of implementing the present invention that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another module may implement several functions enumerated in the claims. Some measures are recorded in dependent claims that are different from each other, but this does not mean that these measures cannot be combined to produce a better effect. A computer program may be stored/distributed in an appropriate medium such as an optical storage medium or a solid-state medium and be provided together with other hardware or be used as a part of hardware, or may be distributed in another manner, for example, by using the Internet, or another wired or wireless telecommunications system.

Specific examples are used in this specification to describe the principle and implementations of the present invention. The descriptions of the foregoing embodiments are merely intended to help understand the method and idea of the present invention. In addition, with respect to the implementations and the application scope, modifications may be made by a person of ordinary skill in the art according to the idea of the present invention. Therefore, this specification shall not be construed as a limitation on the present invention.

## Claims

1. A photographing method, wherein the method is performed by an electronic apparatus, the electronic apparatus comprises a camera, and the method comprises:
detecting whether the camera is currently in a stable photographing state;
when the camera is currently in the stable photographing state, obtaining image data at a first time point;
determining a target photographing type based on the image data at the first time point;
when a photographing instruction from a user is received, obtaining image data at a second time point; and
processing the image data at the second time point according to an image processing manner corresponding to the target photographing type, to obtain target image data.

2. The method according to claim 1, wherein the determining a target photographing type based on the image data at the first time point comprises:
determining, based on the image data at the first time point, at least two candidate photographing types of the photographed scene and confidence degrees of the at least two photographing types; and
determining the target photographing type in the at least two photographing types based on the confidence degrees of the at least two photographing types.

3. The method according to claim 2, wherein the determining, based on the image data at the first time point, at least two candidate photographing types of the photographed scene and confidence degrees of the at least two photographing types comprises:
obtaining, by using the image data at the first time point as an input of a photographing mode classification model, an output of the photographing mode classification model, wherein the output of the photographing mode classification model comprises the at least two candidate photographing types and the confidence degrees of the at least two photographing types, the photographing mode classification model is obtained by training a to-be-trained photographing mode classification model by using a photographing mode training set, and the photographing mode training set comprises first training image data and a photographing type corresponding to the first training image data.

4. The method according to claim 3, wherein the photographing mode training set further comprises second training image data marked as being not corresponding to the photographing type.

5. The method according to any one of claims 1 to 4, wherein the type of the photographed scene is a food scene, and the processing the image data at the second time point according to an image processing manner corresponding to the target photographing type, to obtain target image data comprises:
increasing contrast and color saturation of an image indicated by the image data at the second time point, to obtain the target image data.

6. The method according to any one of claims 1 to 4, wherein a type of the photographed scene is a blue-sky scene, and the processing the image data at the second time point according to an image processing manner corresponding to the target photographing type, to obtain target image data comprises:
calculating an adjustment coefficient based on a preset target blue-sky color value and a sky color value in an image indicated by the image data at the second time point; and
processing, based on the adjustment coefficient, the image indicated by the image data at the second time point, to obtain the target image data.

7. The method according to any one of claims 1 to 4, wherein a type of the photographed scene is a green plant scene, and the processing the image data at the second time point according to an image processing manner corresponding to the target photographing type, to obtain target image data comprises:
increasing a color temperature and color saturation of an image indicated by the image data at the second time point, to obtain the target image data.

8. The method according to any one of claims 1 to 4, wherein a type of the photographed scene is a stage scene, and the processing the image data at the second time point according to an image processing manner corresponding to the target photographing type, to obtain target image data comprises:
adjusting a dynamic range and a pixel brightness value of an image indicated by the image data at the second time point, to increase the dynamic range of the image indicated by the image data at the second time point and repair an over-exposed area or an under-exposed area in the image indicated by the image data at the second time point, to obtain the target image data.

9. The method according to any one of claims 1 to 8, wherein the detecting whether the camera is currently in a stable photographing state comprises:
obtaining an acceleration value of movement of the electronic apparatus in a time segment before a current time point; and
determining whether an absolute value of the acceleration value is less than or equal to an acceleration threshold, and when the absolute value of the acceleration value is less than or equal to the acceleration threshold, the camera is currently in the stable photographing state.

10. An electronic apparatus, wherein the electronic apparatus comprises a camera, and the electronic apparatus further comprises:
a detection module, configured to detect whether the camera is currently in a stable photographing state;
an obtaining module, configured to: when the camera is currently in the stable photographing state, obtain image data at a first time point;
a determining module, configured to determine a target photographing type based on the image data that is obtained by the obtaining unit at the first time point, wherein
the obtaining module is further configured to: when a photographing instruction from a user is received, obtain image data at a second time point; and
a processing module, configured to process the image data at the second time point according to an image processing manner corresponding to the target photographing type that is determined by the determining unit, to obtain target image data.

11. The electronic apparatus according to claim 10, wherein the determining module is configured to:
determine, based on the image data at the first time point, at least two candidate photographing types of the photographed scene and confidence degrees of the at least two photographing types; and
determine the target photographing type in the at least two photographing types based on the confidence degrees of the at least two photographing types.

12. The electronic apparatus according to claim 11, wherein the determining module is configured to:
obtain, by using the image data at the first time point as an input of a photographing mode classification model, an output of the photographing mode classification model, wherein the output of the photographing mode classification model comprises the at least two candidate photographing types and the confidence degrees of the at least two photographing types, the photographing mode classification model is obtained by training a to-be-trained photographing mode classification model by using a photographing mode training set, and the photographing mode training set comprises first training image data and a photographing type corresponding to the first training image data.

13. The electronic apparatus according to claim 12, wherein the photographing mode training set further comprises second training image data marked as being not corresponding to the photographing type.

14. The electronic apparatus according to any one of claims 10 to 13, wherein a type of the photographed scene is a food scene, and the processing module is configured to:
increase contrast and color saturation of an image indicated by the image data at the second time point, to obtain the target image data.

15. The electronic apparatus according to any one of claims 10 to 13, wherein a type of the photographed scene is a blue-sky scene, and the processing module is configured to:
calculate an adjustment coefficient based on a preset target blue-sky color value and a sky color value in an image indicated by the image data at the second time point; and
process, based on the adjustment coefficient, the image indicated by the image data at the second time point, to obtain the target image data.

16. The electronic apparatus according to any one of claims 10 to 13, wherein a type of the photographed scene is a green plant scene, and the processing module is configured to:
increase a color temperature and color saturation of an image indicated by the image data at the second time point, to obtain the target image data.

17. The electronic apparatus according to any one of claims 10 to 13, wherein a type of the photographed scene is a stage scene, and the processing module is configured to:
adjust a dynamic range and a pixel brightness value of an image indicated by the image data at the second time point, to increase the dynamic range of the image indicated by the image data at the second time point and repair an over-exposed area or an under-exposed area in the image indicated by the image data at the second time point, to obtain the target image data.

18. The electronic apparatus according to any one of claims 10 to 17, wherein the detection module is configured to:
obtain an acceleration value of movement of the electronic apparatus in a time segment before a current time point; and
determine whether an absolute value of the acceleration value is less than or equal to an acceleration threshold, and when the absolute value of the acceleration value is less than or equal to the acceleration threshold, the camera is currently in the stable photographing state, wherein the acceleration threshold is a real number greater than zero.
